(19) **Europäisches Patentamt / European Patent Office / Office européen des brevets**

(11) **EP 4 485 813 A1**

(12) **EUROPEAN PATENT APPLICATION**
published in accordance with Art. 153(4) EPC

(43) Date of publication:
01.01.2025 Bulletin 2025/01

(21) Application number: 23810910.2

(22) Date of filing: 17.05.2023

(51) International Patent Classification (IPC):
*H04B 7/0413* (2017.01)

(52) Cooperative Patent Classification (CPC):
H04B 7/0413; H04B 7/0417; H04B 7/06

(86) International application number:
PCT/CN2023/094651

(87) International publication number:
WO 2023/226837 (30.11.2023 Gazette 2023/48)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 27.05.2022 CN 202210587550

(71) Applicant: ZTE Corporation
Shenzhen, Guangdong 518057 (CN)

(72) Inventors:
• YE, Xinquan
  Shenzhen, Guangdong 518057 (CN)
• CHEN, Yijian
  Shenzhen, Guangdong 518057 (CN)
• YU, Guanghui
  Shenzhen, Guangdong 518057 (CN)
• LU, Zhaohua
  Shenzhen, Guangdong 518057 (CN)

(74) Representative: Canzler & Bergmeier
Patentanwälte
Partnerschaft mbB
Despag-Straße 6
85055 Ingolstadt (DE)

(54) **CHANNEL INFORMATION FEEDBACK METHOD, ELECTRONIC DEVICE, AND COMPUTER READABLE MEDIUM**

(57) Provided in the present disclosure is a channel information feedback method. The method comprises: determining a target basic vector, the target basic vector being a basic vector conforming to a vector configuration rule; determining a vector row identification bit; according to the target basic vector and the vector row identification bit, determining an extension vector; according to the extension vector, constructing a codebook; and, by means of the codebook, performing channel information feedback. Further provided in the present disclosure are an electronic device and a computer readable medium.

determine a target basic vector — S101

determine vector row identification bits — S102

determine an extended vector according to the target basic vector and the vector row identification bits — S103

construct a codebook according to the extended vector — S104

perform channel information feedback by using the codebook — S105

FIG. 1

**Description**

TECHNICAL FIELD

The present disclosure relates to the technical field of channel information feedback, and in particular, to a channel information feedback method, an electronic device, and a computer readable medium.

BACKGROUND

As potential key technical points in the multi-antenna of direction in the Beyond-5th generation mobile communication technology/6th generation mobile communication technology (B5G/6G), Distributed Multiple-Input Multiple-Output (Distributed MIMO) and Cell-Free Massive Multiple-Input Multiple-Output (CF-mMIMO) receive more and more attention. One significant feature of those technologies is that, in a given area, spatial distribution of Access Points (APs) is sparser than that of centralized APs used by the existing New Radio (NR) technology, the APs are in a relatively large number, and a plurality of APs simultaneously serve a plurality of User Equipments (UEs).
With the related technology, requirements of channel information feedback cannot be met in many cases.

SUMMARY

The present disclosure provides a channel information feedback method, an electronic device, and a computer readable medium.
In a first aspect, an embodiment of the present disclosure provides a channel information feedback method, including: determining a target basic vector, where the target basic vector is a basic vector which conforms to a vector configuration rule; determining vector row identification bits; determining an extended vector according to the target basic vector and the vector row identification bits; constructing a codebook according to the extended vector; and performing channel information feedback by using the codebook.
In some embodiments, before determining the target basic vector, the method further includes: determining a basic vector set according to the vector configuration rule, where the basic vector set includes at least one basic vector; and determining the target basic vector includes: selecting a basic vector from the basic vector set as the target basic vector.
In some embodiments, the vector configuration rule includes: dimension information of basic vectors, generation rule information of the basic vectors, and information of the number of the basic vectors in the basic vector set.
In some embodiments, the vector row identification bits include at least one of: basic vector row identification bits or extended vector row identification bits.
In some embodiments, the basic vector row identification bits indicate an index of a selected row of the target basic vector; and the extended vector row identification bits indicate an index of a selected row of the extended vector.
In some embodiments, determining the vector row identification bits includes: determining the basic vector row identification bits according to a bitmap signaling; or determining the basic vector row identification bits according to a basic-vector-row-identification-bit variable and a basic-vector-row-identification-bit mapping function.
In some embodiments, the basic-vector-row-identification-bit mapping function is determined according to the vector configuration rule; or the basic-vector-row-identification-bit mapping function is configured by a base station.
In some embodiments, the basic-vector-row-identification-bit variable is formed by one element or a plurality of different elements, an element is an integer, and the plurality of different elements are consecutive integers or non-consecutive integers.
In some embodiments, determining the basic vector row identification bits according to the basic-vector-row-identification-bit variable and the basic-vector-row-identification-bit mapping function includes any one of: determining the basic vector row identification bits according to a group of basic-vector-row-identification-bit variables and one basic-vector-row-identification-bit mapping function; determining the basic vector row identification bits according to a group of basic-vector-row-identification-bit variables and a plurality of different basic-vector-row-identification-bit mapping functions; determining the basic vector row identification bits according to a plurality of different groups of basic-vector-row-identification-bit variables and one basic-vector-row-identification-bit mapping function; and determining the basic vector row identification bits according to a plurality of different groups of basic-vector-row-identification-bit variables and a plurality of different basic-vector-row-identification-bit mapping functions.
In some embodiments, the extended vector row identification bits are determined according to a bitmap signaling; or the extended vector row identification bits are determined according to an extended-vector-row-identification-bit variable and an extended-vector-row-identification-bit mapping function.
In some embodiments, the extended-vector-row-identification-bit mapping function is determined according to the vector configuration rule; or the extended-vector-row-identification-bit mapping function is configured by a base station.

In some embodiments, the extended-vector-row-identification-bit variable is formed by one element or a plurality of different elements, an element is an integer, and the plurality of different elements are consecutive integers or non-consecutive integers.

In some embodiments, determining the extended vector row identification bits according to the extended-vector-row-identification-bit variable and the extended-vector-row-identification-bit mapping function includes any one of: determining the extended vector row identification bits according to a group of extended-vector-row-identification-bit variables and one extended-vector-row-identification-bit mapping function; determining the extended vector row identification bits according to a group of extended-vector-row-identification-bit variables and a plurality of different extended-vector-row-identification-bit mapping functions; determining the extended vector row identification bits according to a plurality of different groups of extended-vector-row-identification-bit variables and one extended-vector-row-identification-bit mapping function; and determining the extended vector row identification bits according to a plurality of different groups of extended-vector-row-identification-bit variables and a plurality of different extended-vector-row-identification-bit mapping functions.

In some embodiments, determining the extended vector according to the target basic vector and the vector row identification bits includes: determining the extended vector according to the target basic vector, basic vector row identification bits, and a type of the basic vector row identification bits, where the vector row identification bits includes the basic vector row identification bits; or determining the extended vector according to the target basic vector, the basic vector row identification bits, the type of the basic vector row identification bits, extended vector row identification bits, and a type of the extended vector row identification bits, where the vector row identification bits includes the basic vector row identification bits and the extended vector row identification bits.

In some embodiments, determining the extended vector according to the target basic vector, the basic vector row identification bits, and the type of the basic vector row identification bits includes: in a case where the type of the basic vector row identification bits is a zero-setting type, setting elements of a row of the target basic vector which is corresponding to the basic vector row identification bits to zero according to the target basic vector and the basic vector row identification bits, so as to obtain the extended vector; and in a case where the type of the basic vector row identification bits is a non-zero-setting type, setting elements of a row of the target basic vector which is not corresponding to the basic vector row identification bits to zero according to the target basic vector and the basic vector row identification bits, so as to obtain the extended vector.

In some embodiments, determining the extended vector according to the target basic vector, the basic vector row identification bits, the type of the basic vector row identification bits, the extended vector row identification bits, and the type of the extended vector row identification bits includes: in a case where the type of the basic vector row identification bits is the zero-setting type and the type of the extended vector row identification bits is the zero-setting type, setting elements of a row of the target basic vector which is corresponding to the basic vector row identification bits to zero to obtain a first vector; and setting elements of a row of the first vector which is corresponding to the extended vector row identification bits to zero to obtain the extended vector; in a case where the type of the basic vector row identification bits is the zero-setting type and the type of the extended vector row identification bits is the non-zero-setting type, setting elements of a row of the target basic vector which is corresponding to the basic vector row identification bits to zero to obtain a first vector; and setting elements of a row of the first vector which is not corresponding to the extended vector row identification bits to zero to obtain the extended vector; in a case where the type of the basic vector row identification bits is the non-zero-setting type and the type of the extended vector row identification bits is the zero-setting type, setting elements of a row of the target basic vector which is not corresponding to the basic vector row identification bits to zero to obtain a second vector; and setting elements of a row of the second vector which is corresponding to the extended vector row identification bits to zero to obtain the extended vector; and in a case where the type of the basic vector row identification bits is the non-zero-setting type and the type of the extended vector row identification bits is the non-zero-setting type, setting elements of a row of the target basic vector which is not corresponding to the basic vector row identification bits to zero to obtain a second vector; and setting elements of a row of the second vector which is not corresponding to the extended vector row identification bits to zero to obtain the extended vector.

In some embodiments, the vector row identification bits are capable of being dynamically adjusted with time.

In a second aspect, an embodiment of the present disclosure provides an electronic device, including one or more storage devices and one or more processors, where the one or more storage devices store a computer program executable by the one or more processors, and when the computer program is executed by the one or more processors, the channel information feedback method according to any one of the embodiments of the present disclosure is implemented.

In a third aspect, an embodiment of the present disclosure provides a computer readable medium having stored thereon a computer program which, when executed by a processor, implements the channel information feedback method according to any one of the embodiments of the present disclosure.

In the embodiments of the present disclosure, the extended vector is determined according to the basic vector and the vector row identification bits, and then the codebook for channel information feedback is determined according to the extended vector, so that the codebook is more suitable for a current channel information feedback requirement, and better channel information feedback can be realized according to the codebook, thereby improving the communication quality.

BRIEF DESCRIPTION OF DRAWINGS

In the drawings for the embodiments of the present disclosure:

FIG. 1 is a flowchart illustrating a channel information feedback method according to an embodiment of the present disclosure;
FIG. 2 is another flowchart illustrating a channel information feedback method according to an embodiment of the present disclosure;
FIG. 3 is a block diagram of an electronic device according to an embodiment of the present disclosure; and
FIG. 4 is a block diagram of a computer readable medium according to an embodiment of the present disclosure.

DETAIL DESCRIPTION OF EMBODIMENTS

In order to enable those of ordinary skill in the art to better understand the technical solutions of the present disclosure, a channel information feedback method, an electronic device, and a computer readable medium provided by the embodiments of the present disclosure are described in detail below with reference to the drawings.

The present disclosure will be described more fully below with reference to the drawings, but the embodiments illustrated may be embodied in different forms, and the present disclosure should not be interpreted as being limited to the embodiments described herein. Rather, the embodiments are provided to make the present disclosure thorough and complete, and are intended to enable those of ordinary skill in the art to fully understand the scope of the present disclosure.

The drawings for the embodiments of the present disclosure are intended to provide a further understanding of the embodiments of the present disclosure and constitute a part of the specification. Together with the specific embodiments of the present disclosure, the drawings are used to explain the present disclosure, but do not constitute any limitation to the present disclosure. The above and other features and advantages will become more apparent to those of ordinary skill in the art from the description of the specific embodiments with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the embodiments of the present disclosure and the features therein may be combined with each other if no conflict is incurred.

The terms used herein are merely used to describe specific embodiments, and are not intended to limit the present disclosure. The term "and/or" used herein includes one associated listed item or any and all combinations of more than one associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein

The present disclosure is not limited to those embodiments illustrated by the drawings, but includes modifications to configuration formed based on a manufacturing process. Thus, regions shown in the drawings are illustrative, and shapes of the regions shown in the drawings illustrate specific shapes of regions of elements, but are not intended to make limitations.

In potential application scenarios of the CF-mMIMO in the future, such as large gymnasiums, shopping malls, airports, and automatic factories, spatial distribution of UEs is very complex, and there may be cases where the UEs in some areas are distributed densely and are in a larger number, the UEs in some areas are distributed sparsely and are in a smaller number, and the UEs in some areas have moderate density and are in a moderate number, resulting in different requirements of services for different spatial positions.

It can be seen that situations of channels are more complex in the above cases, but with the related technology, requirements of channel information feedback can be hardly met in those cases, such that communication quality is affected.

In a first aspect, an embodiment of the present disclosure provides a channel information feedback method.

The method provided in the embodiments of the present disclosure is used for communication equipment (such as an AP, a UE, or a base station) to feed information of a corresponding communication channel back to an opposite end, and specifically includes determining a codebook for channel information feedback according to a current situation and then feeding back the information of the channel based on the codebook.

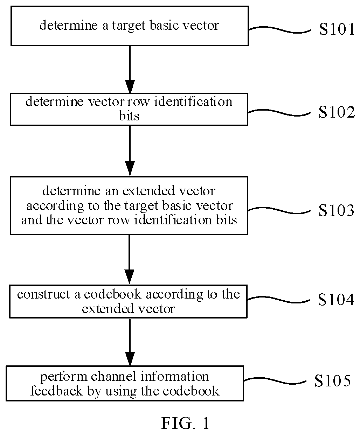

Referring to FIG. 1, the channel information feedback method according to an embodiment of the present disclosure includes the following operations S101 to S105.

At S101, a target basic vector is determined.

The target basic vector is a basic vector which conforms to a vector configuration rule.

At S102, vector row identification bits are determined.

At S103, an extended vector is determined according to the target basic vector and the vector row identification bits.

At S104, a codebook is constructed according to the extended vector.

At S105, channel information feedback is performed by using the codebook.

In the embodiments of the present disclosure, one or more basic vectors (vectors) meeting a requirement (the vector configuration rule) are first determined as the target basic vector(s), the vector row identification bits are determined, and the extended vector may be derived from the target basic vector according to the vector row identification bits (a specific method is described below); and subsequently, the codebook may be constructed according to the extended vector, and channel information feedback may be performed by using the codebook.

It should be understood that the above orders in which operations S101 and S102 are numbered and described do not indicate a necessary execution order of the two operations, that is, it is feasible as long as the target basic vector and the vector row identification bits are obtained before the extended vector is determined.

In some embodiments, the vector row identification bits may be dynamically adjusted with time.

In the embodiments of the present disclosure, the vector row identification bits are determined according to a specific situation where the operation of determining the vector row identification bits is executed. Therefore, the vector row identification bits may vary in different execution processes, that is, the vector row identification bits may be dynamically adjusted with time, so that the extended vector and the codebook which are obtained accordingly may vary. Thus, the codebook obtained according to the embodiments of the present disclosure is "self-adaptive" to a case where the codebook is obtained.

In the embodiments of the present disclosure, the extended vector is determined according to the basic vector and the vector row identification bits, and then the codebook for channel information feedback is determined according to the extended vector, so that the codebook is more suitable for a current channel information feedback requirement, and better channel information feedback can be realized according to the codebook, thereby improving the communication quality.

There are a variety of specific methods for constructing the codebook according to the vector (the extended vector).

For example, for rank1 transmission of a single-polarized antenna, the codebook $W = \frac{1}{\alpha_1}[V_1]$ or $W = \frac{1}{\alpha_1}\left[\sum_{j=1}^{M}\beta_{1,j}V_{1,j}\right]$; for rank1 transmission of a dual-polarized antenna, the codebook

$W = \frac{1}{\alpha_2}\begin{bmatrix} V_1 \\ \varphi V_1 \end{bmatrix}$ or $W = \frac{1}{\alpha_2}\begin{bmatrix} \sum_{j=1}^{M}\beta_{1,j}V_{1,j} \\ \sum_{j=1}^{M}\beta_{1,M+j}V_{1,j} \end{bmatrix}$; for rank2 transmission of the dual-polarized antenna, the codebook $W = \frac{1}{\alpha_3}\begin{bmatrix} V_1 & V_2 \\ \varphi V_1 & -\varphi V_2 \end{bmatrix}$, or $W = \frac{1}{\alpha_3}\begin{bmatrix} \sum_{j=1}^{M}\beta_{1,j}V_{1,j} & \sum_{j=1}^{M}\beta_{2,j}V_{2,j} \\ \sum_{j=1}^{M}\beta_{1,M+j}V_{1,j} & \sum_{j=1}^{M}\beta_{2,M+j}V_{2,j} \end{bmatrix}$; and for rank4 trans-

mission of the dual-polarized antenna, the codebook $W = \frac{1}{\alpha_3}\begin{bmatrix} V_1 & V_2 & V_1 & V_2 \\ \varphi V_1 & \varphi V_2 & -\varphi V_1 & -\varphi V_2 \end{bmatrix}$ or

$$W = \frac{1}{\alpha_3} \begin{bmatrix} \sum_{j=1}^{M} \beta_{1,j} V_{1,j} & \sum_{j=1}^{M} \beta_{2,j} V_{2,j} & \sum_{j=1}^{M} \beta_{1,j} V_{1,j} & \sum_{j=1}^{M} \beta_{2,j} V_{2,j} \\ \sum_{j=1}^{M} \beta_{1,M+j} V_{1,j} & \sum_{j=1}^{M} \beta_{2,M+j} V_{2,j} & -\sum_{j=1}^{M} \beta_{1,M+j} V_{1,j} & -\sum_{j=1}^{M} \beta_{2,M+j} V_{2,j} \end{bmatrix}$$

; where, $\alpha_1$, $\alpha_2$, and $\alpha_3$ are power normalization factors, $\varphi$ is a polarization phase difference, $V_1$, $V_2$, $V_{1,j}$, and $V_{2,j}$ are extended vectors, $\beta_{1,j}$, $\beta_{2,j}$, $\beta_{1,M+j}$, and $\beta_{2,M+j}$ are weighting factors when using a plurality of different extended vectors to construct the codebook W, and M is a total number of the different extended vectors used for constructing the codebook.

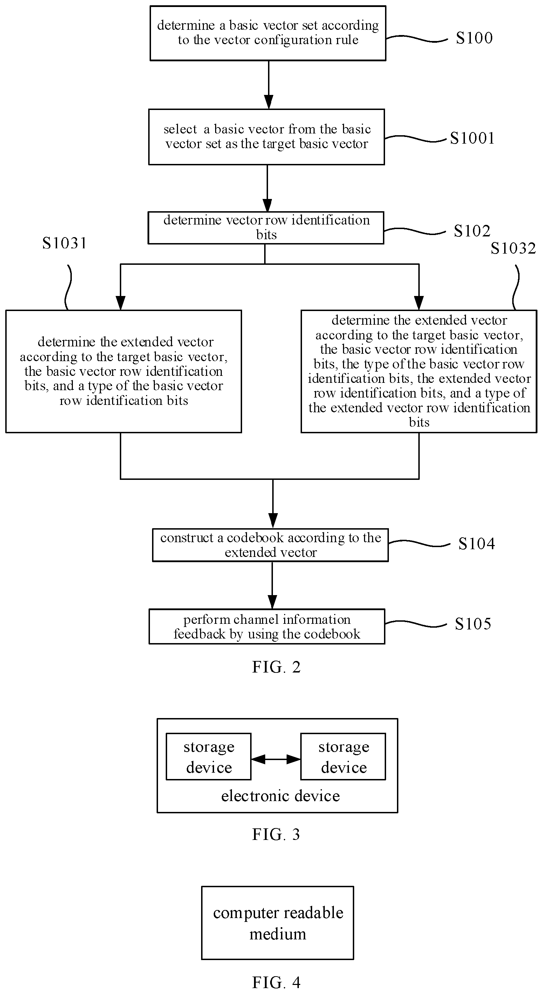

In some embodiments, referring to FIG. 2, before determining the target basic vector (S101), the method further includes: S100, determining a basic vector set according to the vector configuration rule.

The basic vector set includes at least one basic vector.

Determining the target basic vector (S101) includes: S1001, selecting a basic vector from the basic vector set as the target basic vector.

In the embodiments of the present disclosure, the vector configuration rule, i.e., a rule of selecting the target basic vector, may be set first, and then the basic vector set, which may include one basic vector or a plurality of different basic vectors, may be constructed according to the vector configuration rule. Thus, when determining the target basic vector subsequently, a basic vector may be selected from the basic vector set as the target basic vector.

In some embodiments, the vector configuration rule includes: dimension information of basic vectors, generation rule information of the basic vectors, and information of the number of the basic vectors in the basic vector set.

In an implementation of the embodiments of the present disclosure, the above vector configuration rule may include the dimension information of the basic vectors (specifying the dimension of the basic vectors), the generation rule information of the basic vectors (specifying how the basic vectors are generated), and the information of the number of the basic vectors in the basic vector set (specifying how many basic vectors are added to the basic vector set).

Specifically, the basic vector may be an N* 1 vector (N is an integer greater than 1), i.e., a vector having N rows.

The basic vector may be specifically generated with any one of the following methods: directly forming the basic vector from a single Discrete Fourier Transform (DFT) vector; weighting each row of elements of a single DFT vector to obtain the basic vector; subjecting two DFT vectors to Kronecker product to obtain the basic vector; and subjecting two DFT vectors having rows weighted to Kronecker product to obtain the basic vector.

In some embodiments, the vector row identification bits include at least one of: basic vector row identification bits or extended vector row identification bits.

In an implementation of the embodiments of the present disclosure, the vector row identification bits may include the vector row identification bits for the basic vector, and may further include the extended vector row identification bits for the extended vector.

In some embodiments, the basic vector row identification bits indicate an index of a selected row of the target basic vector; and the extended vector row identification bits indicate an index of a selected row of the extended vector.

In an implementation of the embodiments of the present disclosure, the vector row identification bits may be an "index" representing which row of the corresponding vector is selected.

In some embodiments, determining the vector row identification bits includes: determining the basic vector row identification bits according to a bitmap signaling; or determining the basic vector row identification bits according to a basic-vector-row-identification-bit variable and a basic-vector-row-identification-bit mapping function.

In some embodiments, determining the vector row identification bits includes: determining the extended vector row identification bits according to a bitmap signaling; or determining the extended vector row identification bits according to an extended-vector-row-identification-bit variable and an extended-vector-row-identification-bit mapping function.

In an implementation of the embodiments of the present disclosure, the basic vector row identification bits and the extended vector row identification bits may be determined according to the bitmap signaling.

Illustratively, the number of bits of a bitmap may be corresponding to the number of rows of the basic vector, and a value of each bit indicates whether the corresponding row is selected.

For example, when the value of a certain bit is 1, it is indicated that the row of the basic vector corresponding to the bit is selected; or when the value of a certain bit is 0, it is indicated that the row of the basic vector corresponding to the bit is selected.

For example, it is assumed that the basic vector is an 8*1 vector, and the second row and the fifth row of the basic vector are desired to be selected.

When the basic vector row identification bits are determined according to the bitmap signaling, if it is agreed that the value of a certain bit being 1 indicates that the row of the basic vector corresponding to the bit is selected, the bitmap signaling is 00010010, with the values of the second bit and the fifth bit being 1 and the values of the other bits being 0; and if it is agreed that the value of a certain bit being 0 indicates that the row of the basic vector corresponding to the bit is selected, the bitmap signaling is 11101101, with the values of the second bit and the fifth bit being 0 and the values of the other bits being 1.

For example, it is assumed that the extended vector is an 8*1 vector, and the third, sixth and seventh rows of the extended vector are desired to be selected.

When the extended vector row identification bits are determined according to the bitmap signaling, if it is agreed that the value of a certain bit being 1 indicates that the row of the extended vector corresponding to the bit is selected, the bitmap signaling is 01100100, with the values of the third, sixth and seventh bits being 1 and the values of the other bits being 0; and if it is agreed that the value of a certain bit being 0 indicates that the row of the extended vector corresponding to the bit is selected, the bitmap signaling is 10011011, with the values of the third, sixth and seventh bits being 0 and the values of the other bits being 1.

Or in another implementation of the embodiments of the present disclosure, the basic vector row identification bits may be determined according to the basic-vector-row-identification-bit variable and the basic-vector-row-identification-bit mapping function, or the extended vector row identification bits may be determined according to the extended-vector-row-identification-bit variable and the extended-vector-row-identification-bit mapping function.

Specifically, the basic/extended-vector (representing the basic vector or the extended vector, the same below)-row-identification-bit mapping function may be defined as $f(i)$, where $i$ is the basic/extended-vector-row-identification-bit variable, and a result of $f(i)$ represents the basic/extended vector row identification bits.

In some embodiments, the basic-vector-row-identification-bit variable is formed by one element or a plurality of different elements; each element is an integer; and the plurality of different elements are consecutive integers or non-consecutive integers.

In some embodiments, the extended-vector-row-identification-bit variable is formed by one element or a plurality of different elements, each element is an integer, and the plurality of different elements are consecutive integers or non-consecutive integers.

In an implementation of the embodiments of the present disclosure, the basic/extended-vector-row-identification-bit variable may be one integer or a plurality of integers, which is specifically determined according to a row or rows desired to be selected.

When the basic/extended-vector-row-identification-bit variable is a plurality of integers, the plurality of integers may be consecutive (that is, continuous mapping is adopted) or not consecutive (that is, discontinuous mapping is adopted).

For example, assuming that the basic vector is an 8*1 vector, if the second row and the fifth row of the basic vector are desired to be selected, it may be defined that the basic-vector-row-identification-bit mapping function is $f(i) = i$ and the basic-vector-row-identification-bit variable is $i = \{2,5\}$; or it may be defined that the basic-vector-row-identification-bit mapping function is $f(i) = i + 1$ and the basic-vector-row-identification-bit variable is $i = \{1,4\}$.

For example, assuming that the extended vector is an 8*1 vector, if the third to the sixth rows of the extended vector are desired to be selected, it may be defined that the extended-vector-row-identification-bit mapping function is $f(i) = i$ and the extended-vector-row-identification-bit variable is $i = \{3,4,5,6\}$; or it may be defined that the extended-vector-row-identification-bit mapping function is $f(i) = i + 2$ and the extended-vector-row-identification-bit variable is $i = \{1,2,3,4\}$.

In some embodiments, the basic-vector-row-identification-bit mapping function is determined according to the vector configuration rule; or the basic-vector-row-identification-bit mapping function is configured by a base station.

In some embodiments, the extended-vector-row-identification-bit mapping function is determined according to the vector configuration rule; or the extended-vector-row-identification-bit mapping function is configured by a base station.

In an implementation of the embodiments of the present disclosure, the basic/extended-vector-row-identification-bit mapping function may be determined in the vector configuration rule (the rule for determining the basic vector set), or may be set by the base station (no matter which end performs the method).

In some embodiments, determining the basic vector row identification bits according to the basic-vector-row-identification-bit variable and the basic-vector-row-identification-bit mapping function includes any one of: determining the basic vector row identification bits according to a group of basic-vector-row-identification-bit variables and one basic-vector-row-identification-bit mapping function; determining the basic vector row identification bits according to a group of basic-vector-row-identification-bit variables and a plurality of different basic-vector-row-identification-bit mapping functions; determining the basic vector row identification bits according to a plurality of different groups of basic-vector-row-identification-bit variables and one basic-vector-row-identification-bit mapping function; and determining the basic vector row identification bits according to a plurality of different groups of basic-vector-row-identification-bit variables and a plurality of different basic-vector-row-identification-bit mapping functions.

In some embodiments, determining the extended vector row identification bits according to the extended-vector-row-identification-bit variable and the extended-vector-row-identification-bit mapping function includes any one of: determining the extended vector row identification bits according to a group of extended-vector-row-identification-bit variables and one extended-vector-row-identification-bit mapping function; determining the extended vector row identification bits according to a group of extended-vector-row-identification-bit variables and a plurality of different extended-vector-row-identification-bit mapping functions; determining the extended vector row identification bits according to a plurality of different groups of extended-vector-row-identification-bit variables and one extended-vector-row-identification-bit mapping function; and determining the extended vector row identification bits according to a plurality of different groups of extended-vector-row-identification-bit variables and a plurality of different extended-vector-row-identification-bit mapping functions.

In an implementation of the embodiments of the present disclosure, when the basic/extended vector row identification bits are determined according to the basic/extended-vector-row-identification-bit variable and the basic/extended-vector-row-identification-bit mapping function, one or more groups of basic/extended-vector-row-identification-bit variables may be adopted, and one or more basic/extended-vector-row-identification-bit mapping functions may also be adopted.

Furthermore, various combinations may be obtained based on the number of the basic/extended-vector-row-identification-bit variables and the number of the basic/extended-vector-row-identification-bit mapping functions.

For example, assuming that the basic vector is a 16*1 vector, if the second to the fifth rows and the eighth to the eleventh rows of the basic vector are desired to be selected, it may be defined that the basic-vector-row-identification-bit mapping functions are $f2(i) = i + 1$ and $f2(i) = i + 7$ and the basic-vector-row-identification-bit variable is $i = \{1,2,3,4\}$; or it may be defined that the basic-vector-row-identification-bit mapping functions are $f2(i) = i + 1$ and $f2(j) = j + 2$ and the basic-vector-row-identification-bit variables are $i = \{1,2,3,4\}$ and $j = \{6,7,8,9\}$; or it may be defined that the basic-vector-row-identification-bit mapping function is $f(i) = i$ and the basic-vector-row-identification-bit variable is $i = \{2,3,4,5,8,9,10,11\}$.

For example, assuming that the extended vector is a 16*1 vector, if the first, second, ninth and tenth rows of the extended vector are desired to be selected, it may be defined that the extended-vector-row-identification-bit mapping functions are $f2(i) = i$ and $f2(i) = i + 8$ and the extended-vector-row-identification-bit variable is $i = \{1,2\}$; or it may be defined that the extended-vector-row-identification-bit mapping functions are $f2(i) = i + 1$ and $f2(j) = j*2 + 2$ and the extended-vector-row-identification-bit variables are $i = \{0,1,8\}$ and $j = \{4\}$; or it may be defined that the extended-vector-row-identification-bit mapping function is $f(i) = i - 1$ and the extended-vector-row-identification-bit variable is $i = \{2,3,10,11\}$.

In some embodiments, referring to FIG. 2, determining the extended vector according to the target basic vector and the vector row identification bits (S103) includes the following operation S1031 or operation 1032.

At S1031, the extended vector is determined according to the target basic vector, the basic vector row identification bits, and a type of the basic vector row identification bits.

The vector row identification bits include the basic vector row identification bits.

At S1032, the extended vector is determined according to the target basic vector, the basic vector row identification bits, the type of the basic vector row identification bits, the extended vector row identification bits, and a type of the extended vector row identification bits.

The vector row identification bits include the basic vector row identification bits and the extended vector row identification bits.

In a case where the vector row identification bits merely include the basic vector row identification bits, the target basic vector may be processed according to the basic vector row identification bits and the type of the basic vector row identification bits to obtain the extended vector.

In a case where the vector row identification bits include both the basic vector row identification bits and the extended vector row identification bits, the target basic vector may be processed according to the basic vector row identification bits, the extended vector row identification bits, and the types of the basic vector row identification bits and the extended vector row identification bits to obtain the extended vector.

In some embodiments, determining the extended vector according to the target basic vector, the basic vector row identification bits, and the type of the basic vector row identification bits (S1031) includes: S10311, in a case where the type of the basic vector row identification bits is a zero-setting type, setting elements of a row of the target basic vector which is corresponding to the basic vector row identification bits to zero according to the target basic vector and the basic vector row identification bits, so as to obtain the extended vector; and S10312, in a case where the type of the basic vector row identification bits is a non-zero-setting type, setting elements of a row of the target basic vector which is not corresponding to the basic vector row identification bits to zero according to the target basic vector and the basic vector row identification bits, so as to obtain the extended vector.

In a case where the vector row identification bits merely include the basic vector row identification bits, if the type of the basic vector row identification bits is the zero-setting type, the elements of the row in the target basic vector which is corresponding to the basic vector row identification bits is set to zero to obtain the extended vector.

For example, in a case where the target basic vector V0 is an 8*1 vector, the basic vector row identification bits $s = \{1,2,4\}$, and the type of the basic vector row identification bits is the zero-setting type, then the elements of the first, second and fourth rows of V0 are set to zero, and the elements of the other rows are kept unchanged, thus obtaining the extended vector V1, that is, $V1 = P1*V0$ and $P1 = diag(0,0,1,0,1,1,1,1)$.

Correspondingly, if the type of the basic vector row identification bits is the non-zero-setting type, the elements of the row in the target basic vector which is corresponding to the basic vector row identification bits is kept unchanged, and

8

the elements of the other rows that are not corresponding to the basic vector row identification bits are set to zero to obtain the extended vector.

For example, in a case where the target basic vector V0 is an 8*1 vector, the basic vector row identification bits s = {1,2,4}, and the type of the basic vector row identification bits is the non-zero-setting type, then the elements of the third, fifth, sixth, seventh and eighth rows of V0 are set to zero, and the elements of the other rows are kept unchanged, thus obtaining the extended vector V1, that is, V1 = P1*V0 and P1 = diag(1,1,0,1,0,0,0,0).

In some embodiments, determining the extended vector according to the target basic vector, the basic vector row identification bits, the type of the basic vector row identification bits, the extended vector row identification bits, and the type of the extended vector row identification bits (S1032) includes: S10321, in a case where the type of the basic vector row identification bits is the zero-setting type and the type of the extended vector row identification bits is the zero-setting type, setting elements of a row of the target basic vector which is corresponding to the basic vector row identification bits to zero to obtain a first vector; and setting elements of a row of the first vector which is corresponding to the extended vector row identification bits to zero to obtain the extended vector; S10322, in a case where the type of the basic vector row identification bits is the zero-setting type and the type of the extended vector row identification bits is the non-zero-setting type, setting elements of a row of the target basic vector which is corresponding to the basic vector row identification bits to zero to obtain a first vector; and setting elements of a row of the first vector which is not corresponding to the extended vector row identification bits to zero to obtain the extended vector; S10323, in a case where the type of the basic vector row identification bits is the non-zero-setting type and the type of the extended vector row identification bits is the zero-setting type, setting elements of a row of the target basic vector which is not corresponding to the basic vector row identification bits to zero to obtain a second vector; and setting elements of a row of the second vector which is corresponding to the extended vector row identification bits to zero to obtain the extended vector; and S 10324, in a case where the type of the basic vector row identification bits is the non-zero-setting type and the type of the extended vector row identification bits is the non-zero-setting type, setting elements of a row of the target basic vector which is not corresponding to the basic vector row identification bits to zero to obtain a second vector; and setting elements of a row of the second vector which is not corresponding to the extended vector row identification bits to zero to obtain the extended vector.

In a case where the vector row identification bits include both the basic vector row identification bits and the extended vector row identification bits, the row in the target basic vector which is corresponding to the basic vector row identification bits is first set to zero in response to the type of the basic vector row identification bits being the zero-setting type, or the other rows in the target basic vector that are not corresponding to the basic vector row identification bits are first set to zero in response to the type of the basic vector row identification bits being the non-zero-setting type, so as to obtain the first vector (obtained by setting the row corresponding to the basic vector row identification bits to zero) or the second vector (obtained by setting the other rows not corresponding to the basic vector row identification bits to zero) as an intermediate vector.

Then, the row in the intermediate vector (the first vector or the second vector) which is corresponding to the extended vector row identification bits is set to zero in response to the type of the extended vector row identification bits being the zero-setting type, or the other rows in the intermediate vector (the first vector or the second vector) that are not corresponding to the extended vector row identification bits are set to zero in response to the type of the extended vector row identification bits being the non-zero-setting type, so as to obtain the extended vector.

For example, in a case where the target basic vector V0 is an 8*1 vector, the basic vector row identification bits s = {1,2,4}, the type of the basic vector row identification bits is the zero-setting type, the extended vector row identification bits d = {3}, and the type of the extended vector row identification bits is the zero-setting type: firstly, according to V0, s, and the type of the basic vector row identification bits, the elements of the first, second and fourth rows of V0 are set to zero, and the elements of the other rows are kept unchanged, so as to obtain the first vector T0, that is, T0 = P1 * V0 and P1 = diag(0,0,1,0,1,1,1,1); and then, according to T0, d, and the type of the extended vector row identification bits, the elements of the third row of T0 are set to zero, and the elements of the other rows are kept unchanged, thus obtaining the extended vector V1, that is, V1 = P2*T0 and P2 = diag(1,1,0,1,1,1,1,1).

For example, in a case where the target basic vector V0 is an 8*1 vector, the basic vector row identification bits s = {1,2,4}, the type of the basic vector row identification bits is the zero-setting type, the extended vector row identification bits d = {1,2,3,4,5}, and the type of the extended vector row identification bits is the non-zero-setting type: firstly, according to V0, s, and the type of the basic vector row identification bits, the elements of the first, second and fourth rows of V0 are set to zero, and the elements of the other rows are kept unchanged, so as to obtain the first vector T0, that is, T0 = P1*V0 and P1 = diag(0,0,1,0,1,1,1,1); and then, according to T0, d, and the type of the extended vector row identification bits, the elements of the sixth, seventh and eighth rows of T0 are set to zero, and the elements of the other rows are kept unchanged, thus obtaining the extended vector V1, that is, V1 = P2*T0 and P2 = diag(1,1,1,1,1,0,0,0).

For example, in a case where the target basic vector V0 is a 12*1 vector, the basic vector row identification bits s = {1,2,3,4,7,11,12}, the type of the basic vector row identification bits is the non-zero-setting type, the extended vector row identification bits d = {2,5,7,11}, and the type of the extended vector row identification bits is the zero-setting type: firstly, according to V0, s, and the type of the basic vector row identification bits, the elements of the fifth, sixth, eighth, ninth and tenth rows of V0 are set to zero, and the elements of the other rows are kept unchanged, so as to obtain the second vector Q0, that is, Q0 = P1*V0 and P1=diag(1,1,1,1,0,0,1,0,0,0,1,1); and then, according to Q0, d, and the type of the extended vector row identification bits, the elements of the second, fifth, seventh and eleventh rows of Q0 are set to zero, and the elements of the other rows are kept unchanged, thus obtaining the extended vector V1, that is, V1 = P2 * Q0 and P2 = diag(1,0,1,1,0,1,0,1,1,1,0,1) .

For example, in a case where the target basic vector V0 is a 16*1 vector, the basic vector row identification bits s = {2,3,4,5,6,7,8,9,10,11,12,13}, the type of the basic vector row identification bits is the non-zero-setting type, the extended vector row identification bits d = {1,2,4,8,12,13,14,15,16}, and the type of the extended vector row identification bits is the non-zero-setting type: firstly, according to V0, s, and the type of the basic vector row identification bits, the elements of the first, fourteenth, fifteenth and sixteenth rows of V0 are set to zero, and the elements of the other rows are kept unchanged, so as to obtain the second vector Q0, that is, Q0 = P1*V0 and P1 = diag(0,1,1,1,1,1,1,1,1,1,1,1,1,0,0,0); and then, according to Q0, d, and the type of the extended vector row identification bits, the elements of the third, fifth, sixth, seventh, ninth, tenth and eleventh rows of Q0 are set to zero, and the elements of the other rows are kept unchanged, thus obtaining the extended vector V1, that is, V1 = P2 * Q0 and P2 = diag(1,1,0,1,0,0,0,1,0,0,0,1,1,1,1,1).

In a second aspect, referring to FIG. 3, an embodiment of the present disclosure provides an electronic device, including: one or more storage devices and one or more processors, where the one or more storage devices store a computer program executable by the one or more processors, and when the computer program is executed by the one or more processors, the channel information feedback method according to any one of the embodiments of the present disclosure is implemented.

In a third aspect, referring to FIG. 4, an embodiment of the present disclosure provides a computer readable medium having stored thereon a computer program which, when executed by a processor, implements the channel information feedback method according to any one of the embodiments of the present disclosure.

In the embodiments of the present disclosure, the processor is a device having data processing capability, and includes, but is not limited to, a central processing unit (CPU); and the storage device is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and an input/output (I/O) interface (read/write interface) is connected between the processor and the storage device, is capable of enabling information interaction between the storage device and the processor, and includes, but is not limited to, a data bus (Bus).

It should be understood by those of ordinary skill in the art that the functional modules/units in all or some of the operations, the systems, and the devices in the methods disclosed above may be implemented as software, firmware, hardware, or suitable combinations thereof.

If implemented as hardware, the division between the functional modules/units stated above is not necessarily corresponding to the division of physical components; for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR SDRAM, etc.), an ROM, an EEPROM, a FLASH or other magnetic disks; a Compact Disc Read Only Memory (CD-ROM), a Digital Versatile Disc (DVD) or other optical discs; a magnetic cassette, a magnetic tape, a magnetic disk or other magnetic storage devices; and any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

**Claims**

1. A channel information feedback method, comprising:

   determining a target basic vector, wherein the target basic vector is a basic vector which conforms to a vector configuration rule;
   determining vector row identification bits;
   determining an extended vector according to the target basic vector and the vector row identification bits;
   constructing a codebook according to the extended vector; and
   performing channel information feedback by using the codebook.

2. The method of claim 1, wherein before determining the target basic vector, the method further comprises:

   determining a basic vector set according to the vector configuration rule, wherein the basic vector set comprises at least one basic vector, and
   determining the target basic vector comprises:
   selecting a basic vector from the basic vector set as the target basic vector.

3. The method of claim 2, wherein the vector configuration rule comprises:
   dimension information of basic vectors, generation rule information of the basic vectors, and information of the number of the basic vectors in the basic vector set.

4. The method of claim 1, wherein the vector row identification bits comprise at least one of:
   basic vector row identification bits or extended vector row identification bits.

5. The method of claim 4, wherein

   the basic vector row identification bits indicate an index of a selected row of the target basic vector, and
   the extended vector row identification bits indicate an index of a selected row of the extended vector.

6. The method of claim 4, wherein determining the vector row identification bits comprises:

   determining the basic vector row identification bits according to a bitmap signaling;
   or
   determining the basic vector row identification bits according to a basic-vector-row-identification-bit variable and a basic-vector-row-identification-bit mapping function.

7. The method of claim 6, wherein

   the basic-vector-row-identification-bit mapping function is determined according to the vector configuration rule;
   or
   the basic-vector-row-identification-bit mapping function is configured by a base station.

8. The method of claim 6, wherein
   the basic-vector-row-identification-bit variable is formed by one element or a plurality of different elements, an element is an integer, and the plurality of different elements are consecutive integers or non-consecutive integers.

9. The method of claim 6, wherein determining the basic vector row identification bits according to the basic-vector-row-identification-bit variable and the basic-vector-row-identification-bit mapping function comprises any one of:

   determining the basic vector row identification bits according to a group of basic-vector-row-identification-bit variables and one basic-vector-row-identification-bit mapping function;
   determining the basic vector row identification bits according to a group of basic-vector-row-identification-bit variables and a plurality of different basic-vector-row-identification-bit mapping functions;
   determining the basic vector row identification bits according to a plurality of different groups of basic-vector-row-identification-bit variables and one basic-vector-row-identification-bit mapping function; and
   determining the basic vector row identification bits according to a plurality of different groups of basic-vector-row-identification-bit variables and a plurality of different basic-vector-row-identification-bit mapping functions.

**10.** The method of claim 4, wherein

the extended vector row identification bits are determined according to a bitmap signaling;
or
the extended vector row identification bits are determined according to an extended-vector-row-identification-bit variable and an extended-vector-row-identification-bit mapping function.

**11.** The method of claim 10, wherein

the extended-vector-row-identification-bit mapping function is determined according to the vector configuration rule;
or
the extended-vector-row-identification-bit mapping function is configured by a base station.

**12.** The method of claim 10, wherein
the extended-vector-row-identification-bit variable is formed by one element or a plurality of different elements, an element is an integer, and the plurality of different elements are consecutive integers or non-consecutive integers.

**13.** The method of claim 10, wherein determining the extended vector row identification bits according to the extended-vector-row-identification-bit variable and the extended-vector-row-identification-bit mapping function comprises any one of:

determining the extended vector row identification bits according to a group of extended-vector-row-identification-bit variables and one extended-vector-row-identification-bit mapping function;
determining the extended vector row identification bits according to a group of extended-vector-row-identification-bit variables and a plurality of different extended-vector-row-identification-bit mapping functions;
determining the extended vector row identification bits according to a plurality of different groups of extended-vector-row-identification-bit variables and one extended-vector-row-identification-bit mapping function; and
determining the extended vector row identification bits according to a plurality of different groups of extended-vector-row-identification-bit variables and a plurality of different extended-vector-row-identification-bit mapping functions.

**14.** The method of claim 1, wherein determining the extended vector according to the target basic vector and the vector row identification bits comprises:

determining the extended vector according to the target basic vector, basic vector row identification bits, and a type of the basic vector row identification bits, wherein the vector row identification bits comprises the basic vector row identification bits;
or
determining the extended vector according to the target basic vector, the basic vector row identification bits, the type of the basic vector row identification bits, extended vector row identification bits, and a type of the extended vector row identification bits, wherein the vector row identification bits comprising the basic vector row identification bits and the extended vector row identification bits.

**15.** The method of claim 14, wherein determining the extended vector according to the target basic vector, the basic vector row identification bits, and the type of the basic vector row identification bits comprises:

in a case where the type of the basic vector row identification bits is a zero-setting type, setting elements of a row of the target basic vector which is corresponding to the basic vector row identification bits to zero according to the target basic vector and the basic vector row identification bits, so as to obtain the extended vector; and
in a case where the type of the basic vector row identification bits is a non-zero-setting type, setting elements of a row of the target basic vector which is not corresponding to the basic vector row identification bits to zero according to the target basic vector and the basic vector row identification bits, so as to obtain the extended vector.

**16.** The method of claim 15, wherein determining the extended vector according to the target basic vector, the basic vector row identification bits, the type of the basic vector row identification bits, the extended vector row identification bits, and the type of the extended vector row identification bits comprises:

in a case where the type of the basic vector row identification bits is the zero-setting type and the type of the extended vector row identification bits is the zero-setting type, setting elements of a row of the target basic vector which is corresponding to the basic vector row identification bits to zero to obtain a first vector; and setting elements of a row of the first vector which is corresponding to the extended vector row identification bits to zero to obtain the extended vector;

in a case where the type of the basic vector row identification bits is the zero-setting type and the type of the extended vector row identification bits is the non-zero-setting type, setting elements of a row of the target basic vector which is corresponding to the basic vector row identification bits to zero to obtain a first vector; and setting elements of a row of the first vector which is not corresponding to the extended vector row identification bits to zero to obtain the extended vector;

in a case where the type of the basic vector row identification bits is the non-zero-setting type and the type of the extended vector row identification bits is the zero-setting type, setting elements of a row of the target basic vector which is not corresponding to the basic vector row identification bits to zero to obtain a second vector; and setting elements of a row of the second vector which is corresponding to the extended vector row identification bits to zero to obtain the extended vector; and

in a case where the type of the basic vector row identification bits is the non-zero-setting type and the type of the extended vector row identification bits is the non-zero-setting type, setting elements of a row of the target basic vector which is not corresponding to the basic vector row identification bits to zero to obtain a second vector; and setting elements of a row of the second vector which is not corresponding to the extended vector row identification bits to zero to obtain the extended vector.

17. The method of claim 1, wherein
the vector row identification bits are capable of being dynamically adjusted with time.

18. An electronic device, comprising one or more storage devices and one or more processors, wherein the one or more storage devices store a computer program executable by the one or more processors, and when the computer program is executed by the one or more processors, the channel information feedback method of any one of claims 1 to 17 is implemented.

19. A computer readable medium having stored thereon a computer program which, when executed by a processor, implements the channel information feedback method of any one of claims 1 to 17.

determine a target basic vector — S101

determine vector row identification bits — S102

determine an extended vector according to the target basic vector and the vector row identification bits — S103

construct a codebook according to the extended vector — S104

perform channel information feedback by using the codebook — S105

FIG. 1

determine a basic vector set according to the vector configuration rule — S100

select a basic vector from the basic vector set as the target basic vector — S1001

determine vector row identification bits — S102

S1031

S1032

determine the extended vector according to the target basic vector, the basic vector row identification bits, and a type of the basic vector row identification bits

determine the extended vector according to the target basic vector, the basic vector row identification bits, the type of the basic vector row identification bits, the extended vector row identification bits, and a type of the extended vector row identification bits

construct a codebook according to the extended vector — S104

perform channel information feedback by using the codebook — S105

FIG. 2

| storage device | ↔ | storage device |
electronic device

FIG. 3

computer readable medium

FIG. 4

<table>
<tr><td colspan="2" align="center"><strong>INTERNATIONAL SEARCH REPORT</strong></td><td>International application No.<br><strong>PCT/CN2023/094651</strong></td></tr>
</table>

**A. CLASSIFICATION OF SUBJECT MATTER**

H04B7/0413(2017.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT, ENTXT, CNKI, IEEE: 反馈, 基础, 码本, 矢量, 索引, 向量, 信道, 行, 标识, bitmap, 比特, 位图, 扩展, MIMO, DFT, channel, CSI, codebook

**C. DOCUMENTS CONSIDERED TO BE RELEVANT**

| Category* | Citation of document, with indication, where appropriate, of the relevant passages | Relevant to claim No. |
|---|---|---|
| X | WO 2017076330 A1 (ZTE CORP.) 11 May 2017 (2017-05-11)<br>description, pages 11-26 | 1-19 |
| A | KR 20170075794 A (SAMSUNG ELECTRONICS CO., LTD.) 03 July 2017 (2017-07-03)<br>entire document | 1-19 |
| A | CN 111525947 A (TELECOMMUNICATIONS TECHNOLOGY RESEARCH INSTITUTE CO., LTD.) 11 August 2020 (2020-08-11)<br>entire document | 1-19 |
| A | WO 2020222548 A1 (LG ELECTRONICS INC.) 05 November 2020 (2020-11-05)<br>entire document | 1-19 |
| A | WO 2022082545 A1 (HUAWEI TECHNOLOGIES CO., LTD.) 28 April 2022 (2022-04-28)<br>entire document | 1-19 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>**08 June 2023** | Date of mailing of the international search report<br>**25 June 2023** |
| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer<br><br><br>Telephone No. |

Form PCT/ISA/210 (second sheet) (July 2022)

**INTERNATIONAL SEARCH REPORT**
**Information on patent family members**

International application No.

**PCT/CN2023/094651**

| Patent document cited in search report | | | Publication date (day/month/year) | Patent family member(s) | | | Publication date (day/month/year) |
|---|---|---|---|---|---|---|---|
| WO | 2017076330 | A1 | 11 May 2017 | CN | 106685497 | A | 17 May 2017 |
| KR | 20170075794 | A | 03 July 2017 | WO | 2016068628 | A1 | 06 May 2016 |
| | | | | IN | 201717018811 | A | 17 November 2017 |
| CN | 111525947 | A | 11 August 2020 | KR | 20210116590 | A | 27 September 2021 |
| | | | | WO | 2020156136 | A1 | 06 August 2020 |
| | | | | EP | 3920431 | A1 | 08 December 2021 |
| | | | | US | 2022116093 | A1 | 14 April 2022 |
| WO | 2020222548 | A1 | 05 November 2020 | US | 2022239357 | A1 | 28 July 2022 |
| WO | 2022082545 | A1 | 28 April 2022 | | None | | |

Form PCT/ISA/210 (patent family annex) (July 2022)